# NEUE EUROPÄISCHE PATENTSCHRIFT

(11) **EP 2 098 355 B2**
(45) Veröffentlichungstag und Bekanntmachung des Hinweises auf die Entscheidung über den Einspruch: **03.08.2022**
(45) Hinweis auf die Patenterteilung: 29.08.2018
(21) Anmeldenummer: 09153841.3
(22) Anmeldetag: 27.02.2009
(51) Int. Cl.: B29C 49/42, B41J 2/01, B41J 3/407

(54) **Blasmaschine und Blasverfahren mit einer Druckeinrichtung**
Stretch blow moulding with printer
Machine de soufflage-étirage dotée d'un dispositif d'impression

(30) Priorität: 04.03.2008 DE 102008012505
(43) Veröffentlichungstag der Anmeldung: 09.09.2009
(73) Patentinhaber: Krones AG, 93073 Neutraubling (DE)
(72) Erfinder: Achhammer, Karl-Heinz, 93073 Neutraubling (DE)
(74) Vertreter: Bittner, Bernhard

(56) Entgegenhaltungen:
- WO-A1-2006/050935
- WO-A1-2007/109891
- WO-A2-2008/031558
- DE-A1- 4 437 435
- DE-A1-102005 041 221
- DE-A1-102005 060 814
- GB-A- 2 372 962
- JP-A- 2003 340 870
- JP-B2- 3 395 086
- US-A- 3 267 842
- US-A- 3 828 522
- US-A- 4 235 579
- US-A- 6 135 654
- US-A1- 2005 092 759
- US-A1- 2006 176 180

## Beschreibung

Die Erfindung bezieht sich auf eine Vorrichtung zum Behandeln von Kunststoffbehältnissen und genauer gesagt eine Vorrichtung zum Expandieren von Kunststoffvorformlingen zu Kunststoffbehältnissen. Derartige Vorrichtungen sind aus dem Stand der Technik seit langem bekannt. Üblicherweise weisen solche Vorrichtungen eine Vielzahl von Blasformen auf, innerhalb denen Vorformlinge aus Kunststoff unter anderem mittels Druckluft zu Kunststoffbehältnissen expandiert werden. Stromabwärts bezüglich dieser Blaseinrichtungen befinden sich üblicherweise weitere Anlagen zum Behandeln der Behältnissen wie beispielsweise Desinfektionseinrichtungen, Befüllungsanlagen, Verschließer und dergleichen.

Weiterhin weisen üblicherweise derartige Anlagen auch Etikettiermaschinen auf, welche die erzeugten Behältnisse mit Etiketten versehen. Oftmals ist es auch bei der Herstellung von Behältnissen wünschenswert, diese einzeln zu identifizieren. Aus der DE 2005 041 221 A1 ist eine Vorrichtung und ein Verfahren zum Herstellen von Etiketten mit RFID-Transpondern bekannt. RFID-Systeme weisen eine Leseeinrichtung und einen RFID-Transponder (ein RFID-Tag) auf. Die Leseeinrichtung weist typischerweise einen Hochfrequenzsender und -empfänger und ein Kopplungselement wie beispielsweise eine Spule oder Antenne zur Kommunikation mit dem Transponder auf. Zudem versorgt die Leseeinrichtung in vielen Anwendungen den Transponder mit Energie über die Aussendung eines hochfrequenten elektromagnetischen Felds, welches in der Antennenspule des Transponders eine Spannung induziert.

DE4437435A1 offenbart eine Vorrichtung und ein Verfahren gemäß den Oberbegriffen der Ansprüche 1 und 11. Gegenüber Identifikationssystemen wie Strichcodes weisen RFID-Transponder die Vorteile auf, dass sie umprogrammierbar sind und eine hohe Datenspeicherkapazität sowie eine sichere Auslesbarkeit aufweisen. Entsprechend wird in der DE 10 2005 041 221 vorgeschlagen, beim Herstellen eines Etiketts mit diesem Etikett auch einen RFID-Transponder auszubilden. Eine derartige Vorgehensweise erlaubt eine Identifizierung des Behältnisses, so bald der Transponder auf diesem angeordnet ist. Teilweise ist es jedoch wünschenswert, eine Identifikation des Behältnisses zu einem früheren Zeitpunkt zu ermöglichen.

Der vorliegenden Erfindung liegt daher die Aufgabe zugrunde, eine Vorrichtung zum Behandeln von Kunststoffbehältnissen zur Verfügung zu stellen, welche eine frühe Individualisierung bzw. Identifizierung der Behältnisse erlaubt.

Dies wird erfindungsgemäß durch eine Vorrichtung nach Anspruch 1 und ein Verfahren nach Anspruch 10 erreicht.

Vorteilhafte Ausführungsformen und Weiterbildungen sind Gegenstand der Unteransprüche.

Eine erfindungsgemäße Vorrichtung zum Behandeln von Kunststoffbehältnissen weist eine Blaseinrichtung auf, welche Vorformlinge zu Behältnissen expandiert. Dabei weist diese Blaseinrichtung eine Vielzahl von Blasstationen auf, in denen jeweils Vorformlinge zu Behältnissen expandierbar sind. Weiterhin ist eine Transporteinrichtung vorgesehen, welche die von den Blasstationen expandierten Behältnisse übernimmt und vereinzelt transportiert. Erfindungsgemäß ist eine Druckeinrichtung vorgesehen, welche die Behältnisse während des Transports mit der Transporteinrichtung mit wenigstens einem Aufdruck versieht.

Unter dem Begriff Druckeinrichtung werden im Folgenden solche Einrichtungen, verstanden welche fließfähige und insbesondere flüssige Materialien die Behältnisse aufbringen.

Durch die erfindungsgemäße Vorgehensweise ist es daher möglich, eine Individualisierung bzw. Identifizierung des Behältnisses direkt nach dessen Herstellung zu ermöglichen. Erfindungsgemäß wird also hier der Aufdruck nicht gemeinsam mit einem Etikett in einer Etikettiermaschine aufgebracht sondern unmittelbar nach dem Erzeugen des Behältnisses, insbesondere in einem Auslaufbereich der Blaseinrichtung.

Vorzugsweise weist die Druckeinrichtung wenigstens ein Druckelement auf, welches eine elektrisch leitfähige Substanz auf die Behältnisse aufbringt und besonders bevorzugt aufspritzt. Damit wird bevorzugt eine Druckeinrichtung in der Art eines Druckkopfs eines Tintenstrahldruckers verwendet. Der Begriff Tinte wird hier jedoch sehr allgemein verstanden und ist nicht auf Tinte auf Wasser- oder Ölbasis usw. beschränkt sondern auch auf Flüssigkeiten oder fließfähige Medien, die elektrisch leitfähige Partikel wie Edelstahlspäne, Kupferpartikel oder dergleichen enthält. Bevorzugt weist die Druckeinrichtung wenigstens ein Druckelement auf, welches eine elek-trisch leitfähige Substanz auf die Behältnisse aufbringt. Unter dieser elektrisch leitfähigen Substanz wird ein leitendes bzw. auch halbleitendes Material verstanden. Damit wird unter der oben genannten Tinte auch jede elektrisch leitfähige Flüssigkeit verstanden, die sich zum Drucken beispielsweise mit Hilfe von herkömmlichen Druckköpfen eignet. Insbesondere sind mit dem Begriff Tinte hier auch Polymere umfasst, die in hauchfeinen Schichten mit hoher Präzision übereinander gedruckt werden können und sich ähnlich wie Tinte verarbeiten lassen.

Bei einer weiteren vorteilhaften Ausführungsform ist die Druckeinrichtung stationär angeordnet, das heißt, die oben erwähnte Transporteinrichtung bzw. die Behältnisse bewegen sich gegenüber der ruhenden Druckeinrichtung. Damit wird der Aufdruck während der Bewegung der Behältnisse erzeugt.

Bevorzugt handelt es sich bei dem Aufdruck um ein Smartlabel bzw. Bestandteile eines Smartlabels. Es wären jedoch auch andere Aufdrucke wie insbesondere aber nicht ausschließlich farbige Bilder denkbar. Auch derartige farbige Bilder könnten zur Identifikation der Behältnisse verwendet werden.

Damit wird vorgeschlagen, an der Transporteinrichtung, welche beispielsweise als Transferstern ausgebildet sein kann, eine Druckeinrichtung vorzusehen, die es ermöglicht, ein Smartlabel (insbesondere mit leitfähiger Tinte oder Farbe) direkt auf die Behälter aufzudrucken. Dabei können die Smartlabels am Boden, im Mündungs- oder im Schulterbereich oder auch in einem mittleren Bereich der Behältnisse aufgedruckt werden.

Mit Hilfe dieses intelligenten Aufdrucks ist es möglich, den nachfolgenden Materialfluss innerhalb einer nachgeschalteten Produktionslinie zu regeln bzw. zu steuern. Diese Regelung kann bis zum Auslieferungslager fortgeführt werden. Der Aufdruck dieser Smartlabels bietet damit eine druckbare Elektronik, welche ein Beschreiben und Auslesen von Informationen ermöglicht, um mit Steuer- und Regeleinheiten, und insbesondere solchen Steuer- und Regeleinheiten, die sich stromabwärts bezüglich der Blaseinrichtung befinden, innerhalb der kompletten Abfüll- und Verpackungslinien zu kommunizieren. Damit ist eine derartige Kommunikation nicht nur im Rahmen der Herstellung der Behältnisse sondern auch bei deren Abfüllung, beim Etikettieren, beim Verpacken, Palletieren, in einem Vollgutlager und auch beim LKW-Transport möglich.

Bei einer weiteren vorteilhaften Ausführungsform ist die Druckeinrichtung derart gestaltet, dass sie ein Smartlabel auf die Behältnisse aufbringt. Vorteilhaft weist die Druckeinrichtung eine Vielzahl von Düsen zum Aufbringen des Ausdrucks auf. Neben der Druckeinrichtung, welche ein intelligentes Smartlabel auf die Behältnisse aufdruckt, wäre es auch möglich, an der Transporteinrichtung weitere Druckköpfe anzuordnen, welche beispielsweise über einen Mehrfarbendruck auch ein farbiges Bild auf das Behältnis aufbringen. Über die erwähnte Vielzahl von Düsen zum Aufbringen des Aufdrucks ist es beispielsweise besonders vorteilhaft möglich, eine Antenne oder dergleichen für den intelligenten Aufdruck zu erzeugen.

Erfindungsgemäß ist stromabwärts bezüglich der Druckeinrichtung eine Trocknungseinrichtung für den Aufdruck vorgesehen. Bei der Trocknungseinrichtung kann es sich um eine Nahinfrarottrocknungseinrichtung handeln, die dem Trocknen von gedruckter Tinte dient. Weiterhin kann auch eine Aushärtungseinrichtung vorgesehen sein, wie beispielsweise eine Ultraviolettaushärtungseinrichtung, die der Aushärtung von Tinte aber auch der Aushärtung von eventuellen Verbindungen eines Mikrochips mit den übrigen Bestandteilen des Smartlabels dient. Diese letztere Einrichtung kann dazu dienen, einen Mikrochip mit dem Behältnis zu verbinden, und ihn in elektrischen Kontakt mit der Antenne eines RFID-Transponders zu bringen um ihn, beispielsweise durch Kleben mit dem Trägermedium oder der Oberfläche des Behälters zu verbinden.

In diesem Zusammenhang wird auf die oben erwähnte DE 10 2005 041 211 A1 verwiesen, deren Offenbarungsgehalt durch Bezugnahme hiermit auch vollständig zum Gegenstand der vorliegenden Anmeldung gemacht wird.

Bei einer weiteren vorteilhaften Ausführungsform weist die Druckeinrichtung eine Vielzahl von Druckelementen auf, die in der Transportrichtung der Behältnisse hintereinander angeordnet sind. So kann zunächst ein Substrat auf die Behältnisse angebracht werden, anschließend eine Halbleiterbeschichtung, anschließend ein Isolator und schließlich Elektroden bzw. eine Antenne.

Vorzugsweise bringt wenigstens ein Druckelement ein Trägermaterial auf das Behältnis auf, welches insgesamt als Träger für einen Transponder dient.

Vorteilhaft enthält das Trägermaterial eine Substanz, welche aus einer Gruppe von Substanzen ausgewählt ist, welche Polyalkylthiophene (PAT), Polyfluorene (PF), Polyphenylenvinylene (PPV), Polystyrol (PS), Polymethylmethacrylat (PMMA), Polyethylenterephthalat (PET), Kombinationen hieraus und dergleichen enthält. Dabei werden vorzugsweise spezifische Trägermaterialien wie das oben erwähnte PAT, PF oder PPV in Verbindung mit PS, PMMA oder PET verwendet, wobei die letztgenannten Materialien als Isolator bzw. Trägersubstrat dienen.

Weiterhin weist die Transporteinrichtung drehbare Körper auf, welche eine Drehung der Behältnisse um ihre Längsachse bewirken. Damit werden hier die Behältnisse nicht nur durch die Transporteinrichtung selbst entlang beispielsweise einer kreisförmigen Bahn bewegt sondern zusätzlich noch um ihre eigene Achse gedreht. Auf diese Weise ist es möglich, die Behältnisse in deren Umfangsrichtung über einen größeren Umfangswinkel hinweg zu bedrucken. Auch wäre auf diese Weise ein vollumfängliches Bedrucken der Behältnisse möglich. Weiterhin ist bevorzugt eine Bildaufnahmeeinrichtung vorgesehen, welche die Behältnisse während des Transports mit der Transporteinrichtung beobachtet. Auf diese Weise kann der vorgenommene Aufdruck kontrolliert werden und damit in einer optischen Kontrolle auf Funktionsfähigkeit getestet werden. So ist es beispielsweise möglich, die Antenne hinsichtlich ihrer Funktionsfähigkeit zu kontrollieren. Bevorzugt ist dabei die Bildaufnahmeeinrichtung stromabwärts bezüglich der Druckeinrichtung angeordnet.

Die vorliegende Erfindung ist weiterhin auf ein Verfahren zum Behandeln von Behältnissen gemaß Anspruch 10 gerichtet. Dabei werden in einem ersten Verfahrensschritt Vorformlinge in eine Blaseinrichtung eingeführt, welche eine Vielzahl von Blasstationen aufweist, die jeweils einen Vorformling zu einem Behältnis expandieren. In einem weiteren Schritt werden die Vorformlinge mit der Blaseinrichtung transportiert, wobei die Vorformlinge während des Transports zu Behältnissen expandiert werden. Schließlich werden die expandierten Behältnisse an eine stromabwärts der Blaseinrichtung vorgesehene Transporteinrichtung übergeben, welche die Behältnisse vereinzelt transportiert. Erfindungsgemäß werden die Behältnisse während des Transports mit der Transporteinrichtung einzeln mit Hilfe einer Druckeinrichtung bedruckt.

Damit wird auch bei dem erfindungsgemäßen Verfahren vorgeschlagen, die Behältnisse im Wesentlichen unmittelbar nach deren Herstellung bzw. nach deren Expansion zu bedrucken. Unter einem Bedrucken wird insbesondere auch ein Aufspritzen von fließfähigen und insbesondere flüssigen Materialien auf das Behältnis verstanden.

Erfindungsgemäß bringt die Druckeinrichtung zum Bedrucken ein fließfähiges Material auf die Behältnisse auf. Damit wird vorgeschlagen, eine Druckeinrichtung in der Art eines Tintenstrahldruckers zum Bedrucken der Behältnisse zu verwenden.

Vorteilhaft bringt die Druckeinrichtung ein elektrisch leitfähiges Material auf die Behältnisse auf, wobei dieses elektrisch leitfähige Material vorteilhaft dazu dient, um Smartlabels auf die Behältnisse aufzubringen.

Bei einem weiteren bevorzugten Verfahren druckt die Druckeinrichtung eine Antenneneinrichtung auf die Behältnisse auf, wobei auch diese Antenneneinrichtung vorzugsweise als Antenne für ein Smartlabel Verwendung findet.

Bei einem weiteren vorteilhaften Verfahren druckt die Druckeinrichtung mehrere Schichten hintereinander auf die Behältnisse auf.

Weitere Vorteile und Ausführungsformen ergeben sich aus den beigefügten Zeichnungen:
Darin zeigen:
Fig. 1 Eine Darstellung einer erfindungsgemäßen Vorrichtung;
Fig. 2 Ein Blockdiagramm zur Veranschaulichung einer Anlage mit einer erfindungsgemäßen Vorrichtung;
Fig. 3a - 3c Darstellungen zur Veranschaulichung von offenbarten Druckeinrichtungen,
Fig. 4 Eine weitere Darstellung zur Veranschaulichung eines Druckverfahrens;
Fig. 5 Eine schematische Darstellung zur Veranschaulichung einer Druckeinrichtung;
Fig. 6 Eine weitere schematische Darstellung zur Veranschaulichung der Offenbarung; und
Fig. 7 Eine Seitenansicht der in Fig. 6 gezeigten Darstellung.

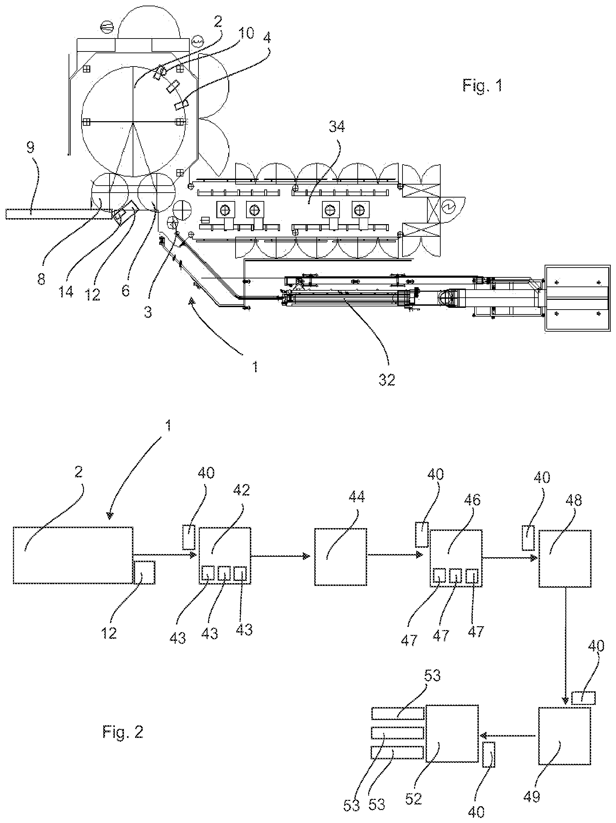

Fig. 1 zeigt eine schematische Darstellung einer erfindungsgemäßen Vorrichtung. Dabei bezieht sich das Bezugszeichen 32 auf eine Sortiereinrichtung, welche Vorformlinge in eine gewünschte Ausrichtung bringt, um diese anschließend einer Heizeinrichtung 34 zuzuführen. Dabei werden die Behältnisse 10 mit Hilfe eines Eintaktrades 3 der Heizeinrichtung 34 zugeführt, wobei die Behältnisse ab diesem Eintaktrad vereinzelt bzw. an jeweils diesen zugeordneten Greifelementen transportiert werden. Nach dem Heizvorgang in der Heizeinrichtung 34 gelangen die Vorformlinge über einen Einlaufstern 6 in eine Streckblasmaschine 2. In dieser Streckblasmaschine 2 werden die Vorformlinge zu Kunststoffbehältnissen expandiert.

Zu diesem Zweck weist die Streckblasmaschine 2 eine Vielzahl von Blasstationen 4 auf, in denen jeweils die Vorformlinge expandiert werden. An diese Streckblasmaschine 2 schließt sich eine Transporteinrichtung 8 in Form eines Auslaufsterns an. An diesem Auslaufstern ist eine Druckeinrichtung 12 angeordnet, welche die Behältnisse mit Aufdrucken versieht. Genauer gesagt handelt es sich bei der Druckeinrichtung 12 um eine Tintenstrahldruckeinrichtung, welche den Druck dadurch erzeugt, dass sie fließfähige Substanzen auf die Behältnisse 10 aufspritzt.

An den Auslaufstern 8 schließt sich eine Transporteinrichtung 9 an wie beispielsweise ein Transportband. Damit werden die Behältnisse 10 stromabwärts bezüglich des Auslaufsterns 8 nicht mehr vereinzelt geführt sondern in Reihen. Da jedoch die Behältnisse mit einem Aufdruck versehen werden, sind sie über diesen Aufdruck auch zu einem späteren Zeitpunkt individualisierbar. An der Druckeinrichtung 12 ist bevorzugt auch eine Bildaufnahmeeinrichtung 14 wie eine Kamera vorgesehen, welche die Aufdrucke kontrolliert beispielsweise im Falle eines Smartlabels prüft, ob die geometrische Form korrekt ist. Vorzugsweise ist diese Bildaufnahmeeinrichtung 14 mit einer Steuerungseinrichtung verbunden, um etwaige Fehler an diese Steuereinrichtung melden zu können. Auch wäre es möglich, Behältnisse 10 mit fehlerhaften Aufdrucken auszusondern.

Fig. 2 zeigt ein Blockdiagramm einer Anlage mit einer erfindungsgemäßen Vorrichtung 1. Dabei beziehen sich die Pfeile auf die Transportrichtung der Behältnisse durch die Anlage. Nachdem die Behältnisse in der Blaseinrichtung 2 erzeugt werden, werden sie mit der erfindungsgemäßen Druckeinrichtung 12 individualisiert. Das Bezugszeichen 40 bezieht sich jeweils auf Steuer- und Regelungseinrichtungen, welche in der Lage sind, erzeugte Smartlabels auszulesen und auch zu beschreiben.

Stromabwärts bezüglich der Blaseinrichtung 2 ist eine Fülleinrichtung 42 angeordnet, welche die Behältnisse mit einem Getränk befüllt. Dabei ist diese Fülleinrichtung 42 derart ausgestaltet, dass sie mehrere Füllorgane 43 aufweist, welche die Behältnisse mit unterschiedlichen Getränke befüllen können. In Abhängigkeit von der ankommenden Flasche kann daher ausgewählt werden, mit welchem Getränk die Behältnisse befüllt werden. Auf diese Weise ist die Steuer- und Regeleinrichtung geeignet, das jeweilige Behältnis zu identifizieren und in Reaktion auf diese Identifikation eine Befüllung mit einem bestimmten Getränk zu veranlassen.

Gleichzeitig kann die Steuer- und Regeleinrichtung 40 auch Informationen auf das Smartlabel schreiben wie beispielsweise welches Produkt befüllte wurde, Informationen über ein Abfülldatum und dergleichen. An die Fülleinrichtung 42 schließt sich eine Desinfektionseinheit 44 und/oder ein Kaltwasserrinser an. Das Bezugszeichen 46 bezieht sich auf eine Etikettiereinrichtung, die mehrere unterschiedliche Etikettierelemente 47 aufweist, welche in der Lage sind, unterschiedliche Etiketten auf die Behältnisse aufzubringen. Entsprechend ist auch hier eine Steuer- und Regelungseinrichtung vorgesehen, welche ein Smartlabel ausliest, um festzustellen, welches Etikett auf das Behältnis aufzubringen ist.

Das Bezugszeichen 46 kennzeichnet einen Verschließer, an dessen Eingang ebenfalls wieder eine entsprechende Steuer- und Regeleinrichtung 40 vorgesehen sein kann, welche darüber entscheidet, mit welchem Verschluss ein bestimmtes Behältnis zu versehen ist.

Das Bezugszeichen 48 kennzeichnet einen Schrumpftunnel, der ebenfalls wiederum mit einer Steuer- und Regeleinrichtung 40 versehen ist, um zu gewährleisten, dass bestimmte Behältnisse mit einer für sie vorgesehenen Verpackung versehen werden. Das Bezugszeichen 49 bezieht sich auf eine weitere Transporteinrichtung.

Entsprechend kann eine Verpackungseinrichtung 52 mit Hilfe der aus dem Smartlabel ausgelesenen Informationen entscheiden, welchem Transportpfad 53 die Behältnisse zuzuführen sind. Es wären jedoch noch andere Anlagenteile denkbar, die mit Hilfe entsprechender Steuer- und Regeleinrichtungen 40 steuerbar sind wie beispielsweise Palettieranlagen, Entpalettieranlagen, Transportbänder und dergleichen.

Wie oben erwähnt, werden die Smartlabels erzeugt, indem mit Hilfe einer Tintenstrahldruckeinrichtung die einzelnen Bestandteile dieses Smartlabels direkt auf die Behältnisse aufgedruckt werden. Zu diesem Zweck werden spezielle Drucktinten verwendet, bei denen es sich insbesondere um organische Polymere handelt. Diese Drucktinten sind elektrisch leitend bzw. halbleitend. Dabei ist es möglich, die Tinte nebelartig auf die Behältnisse aufzubringen aber auch in feinen Linien als elektrisch leitende Substanz. Als Beispiel für eine elektrisch leitende Substanz kann Nanosilber enthaltende Substanz genannt werden. Vorzugsweise weisen die in den Tinten befindlichen Partikel Strukturgrößen auf, welche unter 30 µm liegen.

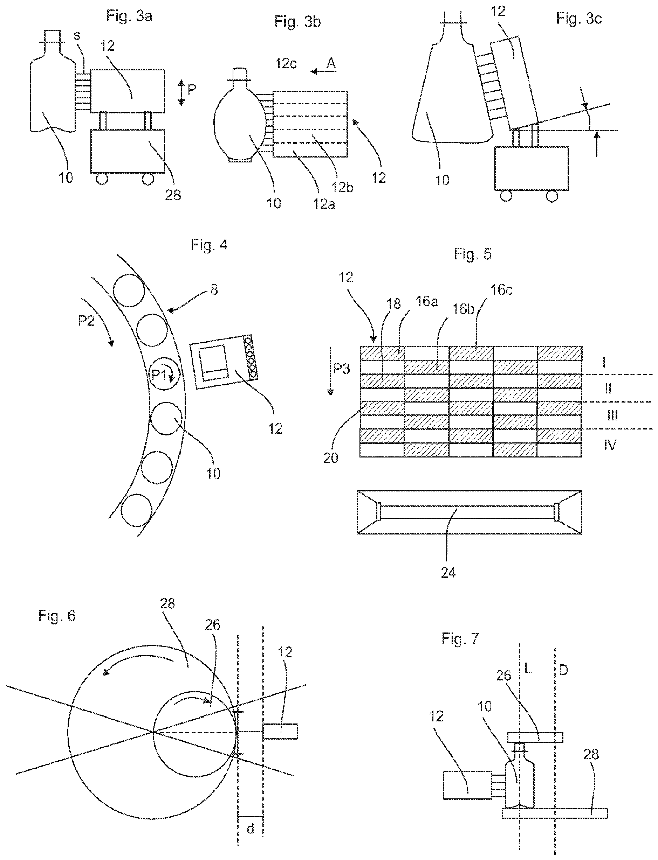

Die Fig. 3a - 3c zeigen weitere Ausführungsbeispiele für die Anordnung einer Druckeinrichtung 12. Diese Druckeinrichtungen eignen sich hier nicht nur zum Bedrucken von Behältnissen mit Smartlabels sondern sind allgemein zum Bedrucken von Flaschen beispielsweise auch anstelle der Verwendung von Etiketten geeignet. Dabei bezieht sich das Bezugszeichen 10 auf eine Flasche, welche von der oben erwähnten Transporteinrichtung 8 transportiert wird. Eine Druckeinrichtung 12 bedruckt die Außenwandlung dieser Flasche, wobei bei der in Fig. 3a gezeigten Ausführungsform die Druckeinrichtung 12 entlang des Doppelpfeils P das heißt in ihrer Höhe verstellbar ist, um auf diese Weise den gesamten Bereich der Außenwandung des Behältnisses zu bedrucken.

Eine Druckeinrichtung könnte auch an einer anderen Stelle der Anlage vorgesehen sein, beispiesweise nach einem Füller. Auch wäre es möglich, dass eine oder mehrere Druckeinrichtungen eine Etikettiereinrichtung ersetzen.

Fig. 3b zeigt eine Anwendung, in welcher Flaschen mit einem gerundeten oder bauchigen Körper bedruckt werden können. Auch hier ist es möglich, die Druckeinrichtung 12 in einer Höhe auszuführen, welche es ermöglicht, den gesamten Körperbereich des Behältnisses 10 zu bedrucken. In einer weiteren Ausführungsform wäre es auch möglich, einzelne Druckelemente 12a, 12b und 12c gegeneinander verschieblich zu gestalten, so dass beispielsweise in Fig. 3b das oberste und das untere Segment 12a in Richtung des Pfeils A auf das Behältnis 10 zubewegt werden können, um auf diese Weise jeweils gleiche oder ähnliche Abstände zwischen den Druckelementen und dem Behältnis zu realisieren.

Fig. 3c zeigt eine weitere Ausgestaltung einer Druckeinrichtung 12. In diesem Falle wäre es möglich, die Druckeinrichtung wie angezeigt zu kippen, um auch schräg stehende Außenwandungen der Behältnisse bedrucken zu können.

Es wäre auch möglich, die in den Fig. 3a - 3c gezeigten Ausführungsformen zu kombinieren, um auf diese Weise Drucke auf unterschiedlichsten Behältnissen 10 herstellen zu können.

Fig. 4 zeigt eine weitere Ausführungsform einer Druckeinrichtung 12. Dabei ist es möglich, zusätzlich zu einer Drehung der Transporteinrichtung entlang des Pfeils P2 auch die Behältnisse selbst um ihre eigene Achse (Pfeil P1) zu drehen. Auf diese Weise kann mit der Druckeinrichtung 12 ein größerer Umfangsbereich der jeweiligen Behältnisse bedruckt werden, da sich die Relativgeschwindigkeit zwischen der Außenwandung des Behältnisses und der Druckeinrichtung 12 erhöht. Auch wäre es möglich, die Behältnisse in Fig. 4 in entgegen gesetzter Richtung zu drehen, um die Relativgeschwindigkeit zwischen der Außenwandung der Behältnisse 10 und der Druckeinrichtung 12 zu verringern. Dies könnte insbesondere bei schnell laufenden Anlagen interessant sein, oder in den Fällen, in denen ein Aufdruck in sehr hoher Qualität erzeugt werden soll.

Weiterhin wäre es auch möglich, mehrere gleichartige Druckeinrichtungen in der Transportrichtung der Behältnisse hintereinander anzuordnen, um auf diese Weise den Durchsatz zu erhöhen. Dabei würde nur jedes n-te Behältnis von einer bestimmten Druckeinrichtung bedruckt, wobei n die Anzahl der Druckeinrichtungen ist.

Fig. 5 zeigt eine schematische Darstellung einer Druckeinrichtung 12. Der Pfeil P3 symbolisiert dabei die Bewegungsrichtung der Behältnisse. Diese Druckeinrichtung 12 weist hier eine Vielzahl von Druckelementen 16a, 16b, 16c auf. Bei einer bevorzugten Ausführungsform weist jedes dieser Druckelemente 16a, 16a, 16c eine Vielzahl von Düsen beispielsweise 512 Düsen auf, welche jeweils ein Druckmittel ausgeben. Die in Fig. 5 gezeigte Druckeinrichtung wäre beispielsweise geeignet, um einen vierfarbigen Druck auf die Behältnisse aufzubringen, wobei die beiden oberen Reihen I die erste Farbe drucken, die beiden Reihen II die nächste Farbe und die beiden Reihen III die dritte Farbe und schließlich die beiden Reihen IV die vierte Farbe. Damit sind die Druckelemente 16a, 18 und 20 in der Transportrichtung P3 hintereinander angeordnet, so dass die Farben nacheinander aufgebracht werden.

Man erkennt, dass die einzelnen Druckelemente 16a, 16b und 16c der Reihe I gegeneinander versetzt sind. Dabei ist zu beachten, dass die einzelnen Druckelemente Seitenränder aufweisen. Wären die einzelnen Druckelemente 16a, 16b und 16c in einer Reihe angeordnet, so würde ein unbedruckter Bereich in einem Übergang zwischen den einzelnen Druckelementen 16a, 16b und 16c entstehen. Durch die Versetzung der Druckelemente entlang des Pfeils P3 kann dieser Versatz ausgeglichen und auf diese Weise ein durchgehender Druck erzeugt werden. Genauer wird erreicht, dass die einzelnen Düsen der Druckelemente 16a, 16b und 16c sich unmittelbar aneinander anschließen. An die Druckeinrichtung 12 schließt sich eine Trocknungseinrichtung 24, welche beispielsweise eine UV-Lampe aufweist, an.

Fig. 6 zeigt eine weitere Ausführungsform für eine Transporteinrichtung. Hier ist das Behältnis 10 mit einem Drehteller 28 gegenüber der Transporteinrichtung 8 exzentrisch mit Hilfe einer Führungseinrichtung 26 geführt, um auf diese Weise zu erreichen, dass ein Abstand d zwischen der Druckeinrichtung 12 und der Außenwandung des Behältnisses in einem bestimmten Bereich im Wesentlichen konstant ist. Der gesamte Drehteller 28 bewegt sich selbst auf einer Kreisbahn (vgl. Fig. 4). Durch geschickte Anpassung der exzentrischen Drehung mit der Führungseinrichtung 26 auf die Transportgeschwindigkeit der Transporteinrichtung 8 kann der oben erwähnte Abstand d im Wesentlichen konstant gehalten werden.

Falls sich das Behältnis 10 auch hier wiederum um seine eigene Achse dreht, kann dieser Bereich mit im Wesentlichen in konstantem Abstand vergrößert werden.

Fig. 7 zeigt eine Seitenansicht der in Fig. 6 gezeigten Darstellung. Man erkennt hier, dass ein Flaschenteller 28, der Bestandteil der Transporteinrichtung 8 ist, um seine Drehachse D drehbar ist und das Behältnis 10 selbst wiederum bezüglich der Achse L um seine eigene Achse gedreht wird. Dabei ist es möglich, dass die Drehung um die Achse D und die Drehung um die Achse L in umgekehrter Richtung erfolgen. Je nach Anwendung wäre es jedoch auch möglich, dass die Drehungen um die Achsen L und D in der gleichen Richtung erfolgen oder das Behältnis nicht um die eigene Längsachse L gedreht wird.

## Patentansprüche

1. Vorrichtung (1) zum Behandeln von Kunststoffbehältnissen mit einer Blaseinrichtung (2), welche Vorformlinge zu Behältnissen (10) expandiert, wobei diese Blaseinrichtung eine Vielzahl von Blasstationen (4) aufweist, in denen jeweils Vorformlinge zu Behältnissen (10) expandierbar sind, mit einer Transporteinrichtung (8), welche die von den Blasstationen (4) expandierten Behältnisse (10) übernimmt und vereinzelt transportiert,
**dadurch gekennzeichnet, dass**
wenigstens eine Druckeinrichtung (12) vorgesehen ist, welche die Behältnisse (10) während des Transports mit der Transporteinrichtung (8) mit wenigstens einem Aufdruck versieht, wobei der Aufdruck anstatt gemeinsam mit einem Etikett in einer Etikettiermaschine aufgebracht zu werden unmittelbar nach dem Erzeugen des Behältnisses (10) aufbringbar ist, wobei die Druckeinrichtung (12) eine Tintenstrahldruckeinrichtung ist, welche ein fließfähiges Material auf die Behältnisse aufbringt und wobei stromabwärts bezüglich der Druckeinrichtung (12) eine Trocknungseinrichtung (24) für den Aufdruck vorgesehen ist.

2. Vorrichtung (1) nach Anspruch 1,
**dadurch gekennzeichnet, dass**
die Druckeinrichtung (12) wenigstens ein Druckelement (16) aufweist, welches eine elektrisch leitfähige Substanz auf die Behältnisse (10) aufbringt.

3. Vorrichtung (1) nach wenigstens einem der vorangegangenen Ansprüche,
**dadurch gekennzeichnet, dass**
die Druckeinrichtung (12) stationär angeordnet ist.

4. Vorrichtung (1) nach wenigstens einem der vorangegangenen Ansprüche,
**dadurch gekennzeichnet, dass**
die Druckeinrichtung (12) derart gestaltet ist, dass sie ein Smartlabel (10) auf die Behältnisse aufbringt.

5. Vorrichtung (1) nach wenigstens einem der vorangegangenen Ansprüche,
**dadurch gekennzeichnet, dass**
die Druckeinrichtung (12) eine Vielzahl von Düsen zum Aufbringen des Aufdrucks aufweist.

6. Vorrichtung (1) nach wenigstens einem der vorangegangenen Ansprüche,
**dadurch gekennzeichnet, dass**
die Druckeinrichtung (12) eine Vielzahl von Druckelementen (16, 18, 20) aufweist, die in der Transportrichtung der Behältnisse (10) hintereinander angeordnet ist.

7. Vorrichtung (1) nach wenigstens einem der vorangegangenen Ansprüche,
**dadurch gekennzeichnet, dass**
wenigstens ein Druckelement (16, 18, 20) ein Trägermaterial auf das Behältnis (10) aufbringt.

8. Vorrichtung (1) nach wenigstens einem der vorangegangenen Ansprüche,
**dadurch gekennzeichnet, dass**
wenigstens ein Druckelement (16, 18, 20) in der Längsrichtung (L) der Behältnisse verschiebbar ist.

9. Vorrichtung (1) nach wenigstens einem der vorangegangenen Ansprüche,
**dadurch gekennzeichnet, dass**
die Transporteinrichtung (8) drehbare Körper aufweist, welche eine Drehung der Behältnisse (10) um ihre Längsachse (L) bewirken.

10. Verfahren zum Behandeln von Behältnissen (10) mit den Schritten:
- Zuführen von Vorformlingen in eine Blaseinrichtung (2) welche eine Vielzahl von Blasstationen aufweist, welche jeweils einen Vorformling zu einem Behältnis expandieren;
- Transport der Vorformlinge mit der Blaseinrichtung (2), wobei die Vorformlinge während des Transports zu Behältnissen (10) expandiert werden;
- Übergabe der expandierten Behältnisse an eine stromabwärts der Blaseinrichtung (2) vorgesehene Transporteinrichtung (8), welche die Behältnisse (10) vereinzelt transportiert;
**dadurch gekennzeichnet, dass**
die Behältnisse während des Transports mit der Transporteinrichtung (8) einzeln mit Hilfe einer Druckeinrichtung (12) bedruckt werden, wobei der Aufdruck anstatt gemeinsam mit einem Etikett in einer Etikettiermaschine aufgebracht zu werden unmittelbar nach dem Erzeugen des Behältnisses (10) aufgebracht wird, wobei die Druckeinrichtung (12) eine Tintenstrahldruckeinrichtung ist, welche ein fließfähiges Material auf die Behältnisse aufbringt und wobei stromabwärts bezüglich der Druckeinrichtung (12) eine Trocknungseinrichtung (24) für den Aufdruck vorgesehen ist.

11. Verfahren nach Anspruch 10,
**dadurch gekennzeichnet, dass**
die Druckeinrichtung (12) zum Bedrucken ein fließfähiges Material auf die Behältnisse (10) aufbringt.

12. Verfahren nach wenigstens einem der vorangegangenen Ansprüche,
**dadurch gekennzeichnet, dass**
die Druckeinrichtung (12) ein elektrisch leitfähiges Material auf die Behältnisse (10) aufbringt.

13. Verfahren nach wenigstens einem der vorangegangenen Ansprüche,
**dadurch gekennzeichnet, dass**
die Druckeinrichtung (12) eine Antenneneinrichtung (24) auf die Behältnisse (10) aufdruckt.

14. Verfahren nach wenigstens einem der vorangegangenen Ansprüche,
**dadurch gekennzeichnet, dass**
die Druckeinrichtung mehrere Schichten hintereinander auf die Behältnisse aufdruckt.

## Claims

1. Facility (1) for processing plastic receptacles, comprising a blow moulding device (2), which expands preforms to form receptacles (10), wherein this blow moulding device has a multiplicity of blow moulding stations (4), in each of which preforms can be expanded to form receptacles (10), and comprising a transport device (8), which receives the receptacles (10) expanded by the blow moulding stations (4), and transports them singly,
**characterized in that**
there is provided at least one printing device (12), which provides the receptacles (10) with at least one imprint during their transport by means of the transport device (8), wherein the imprint can be applied immediately after the receptacles (10) have been produced instead of being applied together with a label in a labeller, wherein the printing device (12) is a ink-jet printing device which applies a flowable material onto the receptacles and wherein a drying device (24) for the imprint is provided downstream relative to the printing device (12).

2. Facility (1) according to claim 1,
**characterized in that**
the printing device (12) has at least one printing element (16), which applies an electrically conductive substance to the receptacles (10).

3. Facility (1) according to at least one of the preceding claims,
**characterized in that**
the printing device (12) is arranged to be stationary.

4. Facility (1) according to at least one of the preceding claims,
**characterized in that**
the printing device (12) is so designed that it applies a smart label (10) to the receptacles.

5. Facility (1) according to at least one of the preceding claims,
**characterized in that**
the printing device (12) has a multiplicity of nozzles for applying the imprint.

6. Facility (1) according to at least one of the preceding claims,
**characterized in that**
the printing device (12) has a multiplicity of printing elements (16, 18, 20), which are arranged in series in the direction of transport of the receptacles (10).

7. Facility (1) according to at least one of the preceding claims,
**characterized in that**
at least one printing element (16, 18, 20) applies a carrier material to the receptacle (10).

8. Facility (1) according to at least one of the preceding claims,
**characterized in that**
at least one printing element (16, 18, 20) is displaceable in the longitudinal direction (L) of the receptacles.

9. Facility (1) according to at least one of the preceding claims,
**characterized in that**
the transport device (8) has rotatable heads, which effect rotation of the receptacles (10) about their longitudinal axis (L).

10. Method for processing receptacles (10), comprising the steps:
- supplying preforms into a blow moulding device (2) having a multiplicity of blow moulding stations, each of which expand a preform to form a receptacle;
- transporting the preforms by means of the blow moulding device (2), the preforms being expanded during their transport to form receptacles (10);
- transfer of the expanded receptacles to a transport device (8) that is provided downstream of the blow moulding device (2) and that transports the receptacles (10) singly;
**characterized in that**
during their transport by means of the transport device (8), the receptacles are imprinted individually by means of a printing device (12), wherein the imprint is applied immediately after production of the receptacles (10) instead of being applied together with a label in a labeller, wherein the printing device (12) is a ink-jet printing device which applies a flowable material onto the receptacles and wherein a drying device (24) for the imprint is provided downstream relative to the printing device (12).

11. Method according to claim 10,
**characterized in that**
the printing device (12) for imprinting applies a fluid material to the receptacles (10).

12. Method according to at least one of the preceding claims,
**characterized in that**
the printing device (12) applies an electrically conductive material to the receptacles (10).

13. Method according to at least one of the preceding claims,
**characterized in that**
the printing device (12) imprints an antenna device (24) onto the receptacles (10).

14. Method according to at least one of the preceding claims,
**characterized in that**
the printing device imprints a plurality of successive layers onto the receptacles.

## Revendications

1. Appareil (1) de traitement de contenants en matière plastique au moyen d'un dispositif de soufflage (2), lequel fait se dilater des ébauches de manière à obtenir des contenants (10), dans lequel ce dispositif de soufflage comprend une pluralité de stations de soufflage (4), dans lesquelles respectivement des ébauches peuvent être dilatées de manière à obtenir des contenants (10), comprenant un dispositif de transport (8), lequel réceptionne les contenants (10) dilatés par les stations de soufflage (4) et les transporte un à un,
**caractérisé en ce que**
au moins un dispositif d'impression (12) est prévu, lequel pourvoit les contenants (10) pendant le transport au moyen du dispositif de transport (8) d'au moins une impression, dans lequel l'impression, au lieu d'être appliquée conjointement avec une étiquette dans une étiqueteuse, peut être appliquée directement après la production du contenant (10), dans lequel le dispositif d'impression (12) est un dispositif d'impression à jet d'encre qui applique un matériau fluide sur les récipients et dans lequel un dispositif de séchage (24) pour l'impression est prévu en aval par rapport au dispositif d'impression (12).

2. Appareil (1) selon la revendication 1,
**caractérisé en ce que**
le dispositif d'impression (12) comprend au moins un élément d'impression (16), lequel applique une substance électro-conductrice sur les contenants (10).

3. Appareil (1) selon au moins l'une des revendications précédentes,
**caractérisé en ce que**
le dispositif d'impression (12) est monté fixe.

4. Appareil (1) selon au moins l'une des revendications précédentes,
**caractérisé en ce que**
le dispositif d'impression (12) est conçu de manière à appliquer une étiquette intelligente (10) sur les contenants.

5. Appareil (1) selon au moins l'une des revendications précédentes,
**caractérisé en ce que**
le dispositif d'impression (12) comprend une pluralité de buses destinées à appliquer l'impression.

6. Appareil (1) selon au moins l'une des revendications précédentes,
**caractérisé en ce que**
le dispositif d'impression (12) comprend une pluralité d'éléments d'impression (16, 18, 20), qui sont agencés les uns derrière les autres dans la direction de transport des contenants (10).

7. Appareil (1) selon au moins l'une des revendications précédentes,
**caractérisé en ce que**
au moins un élément d'impression (16, 18, 20) applique un matériau de support sur le contenant (10).

8. Appareil (1) selon au moins l'une des revendications précédentes,
**caractérisé en ce que**
au moins un élément d'impression (16, 18, 20) est déplaçable dans la direction longitudinale (L) des contenants.

9. Appareil (1) selon au moins l'une des revendications précédentes,
**caractérisé en ce que**
le dispositif de transport (8) comprend des corps rotatifs, lesquels provoquent une rotation des contenants (10) autour de leur axe longitudinal (L).

10. Procédé de traitement de contenants (10) comprenant les étapes :
- d'amenée d'ébauches dans un dispositif de soufflage (2), lequel comprend une pluralité de stations de soufflage, lesquelles dilatent respectivement une ébauche de manière à obtenir un contenant ;
- de transport des ébauches avec le dispositif de soufflage (2), dans lequel les ébauches sont dilatées pendant le transport de manière à obtenir des contenants (10) ;
- de transfert des contenants dilatés sur un dispositif de transport (8) qui est prévu en aval du dispositif de soufflage (2) et qui transporte les contenants (10) un à un ;
**caractérisé en ce que**
les contenants sont imprimés pendant le transport au moyen du dispositif de transport (8) un à un à l'aide d'un dispositif d'impression (12), dans lequel l'impression, au lieu d'être appliquée conjointement avec une étiquette dans une étiqueteuse, est appliquée directement après la production du contenant (10), dans lequel le dispositif d'impression (12) est un dispositif d'impression à jet d'encre qui applique un matériau fluide sur les récipients et dans lequel un dispositif de séchage (24) pour l'impression est prévu en aval par rapport au dispositif d'impression (12).

11. Procédé selon la revendication 10,
**caractérisé en ce que**
le dispositif d'impression (12), pour l'impression, applique un matériau fluide sur les contenants (10).

12. Procédé selon au moins l'une des revendications précédentes,
**caractérisé en ce que**
le dispositif d'impression (12) applique un matériau électro-conducteur sur les contenants (10).

13. Procédé selon au moins l'une des revendications précédentes,
**caractérisé en ce que**
le dispositif d'impression (12) applique un dispositif d'antenne (24) sur les contenants (10).

14. Procédé selon au moins l'une des revendications précédentes,
**caractérisé en ce que**
le dispositif d'impression applique plusieurs couches les unes derrière les autres sur les contenants.
